# EUROPÄISCHE PATENTSCHRIFT

(11) **EP 3 137 709 B1**
(45) Veröffentlichungstag und Bekanntmachung des Hinweises auf die Patenterteilung: **26.09.2018**
(21) Anmeldenummer: 15730382.7
(22) Anmeldetag: 30.04.2015
(51) Int. Cl.: E05B 81/06, E05B 81/20, E05B 83/24, E05B 81/52

(54) **SCHLIESSVORRICHTUNG FÜR EINE KRAFTFAHRZEUGHAUBE UND VERFAHREN**
CLOSING DEVICE FOR A MOTOR-VEHICLE HOOD, AND METHOD
DISPOSITIF DE FERMETURE DU CAPOT D'UN VÉHICULE AUTOMOBILE ET PROCÉDÉ ASSOCIÉ

(30) Priorität: 30.04.2014 DE 102014006239
(43) Veröffentlichungstag der Anmeldung: 08.03.2017
(73) Patentinhaber: Kiekert AG, 42579 Heiligenhaus (DE)
(72) Erfinder: BENDEL, Thorsten, 46149 Oberhausen (DE)
(86) Internationale Anmeldenummer: PCT/DE2015/000210
(87) Internationale Veröffentlichungsnummer: WO 2015/165438

(56) Entgegenhaltungen:
- DE-A1- 10 306 605
- DE-A1-102004 013 671
- DE-A1-102009 052 782
- GB-A- 1 287 168
- US-A1- 2014 088 826

## Beschreibung

Die Erfindung betrifft eine Schließvorrichtung mit einem Gesperre umfassend eine Drehfalle und wenigstens eine Sperrklinke für ein Verrasten der Drehfalle. Die Schließvorrichtung umfasst einen elektrischen Antrieb, mit dem das Gesperre elektrisch geöffnet werden kann.

Eine Schließvorrichtung der eingangs genannten Art dient zum zeitweisen Verschließen von Öffnungen in Kraftfahrzeugen oder Gebäuden mit Hilfe von Türen oder Klappen. Im geschlossenen Zustand greift die Drehfalle mit zwei Armen (Lastarm sowie Fangarm genannt) um einen insbesondere bügelförmig ausgeführten Schließbolzen herum. Der Schließbolzen kann im Fall eines Kraftfahrzeugs an einer Tür oder Klappe des Kraftfahrzeugs befestigt sein und dann das Schloss an der Karosserie oder umgekehrt.

Erreicht die Drehfalle ausgehend von einer geöffneten Stellung durch Verschwenken eine Schließstellung, so wird die Drehfalle schließlich mittels der Sperrklinke verrastet. Ein solches Verschwenken wird durch den Schließbolzen (auch "Schlosshalter" genannt) erreicht, wenn dieser durch ein Schließen einer zugehörigen Tür oder Klappe in die Drehfalle einfällt. Eine Sperrfläche der Sperrklinke liegt im verrasteten Zustand an einer Sperrfläche der Drehfalle an, wodurch verhindert wird, dass die Drehfalle in Richtung geöffnete Stellung zurückgedreht werden kann. Der Schließbolzen kann das Gesperre in der Schließstellung nicht mehr verlassen.

Für ein Öffnen ist es erforderlich, die Sperrklinke aus ihrer Raststellung heraus zu bewegen. Ist die Sperrklinke aus ihrer Raststellung heraus bewegt worden, so dreht sich die Drehfalle in Richtung geöffnete Stellung. In der geöffneten Stellung der Drehfalle und damit in der geöffneten Stellung des Gesperres kann der Schließbolzen das Schloss verlassen. Die Tür oder Klappe kann so wieder geöffnet werden.

Die DE 10 2008 005 181 A1 beschreibt eine Schließhilfe zum Heranziehen einer Klappe oder einer Tür eines Fahrzeugs an die Fahrzeugkarosserie. Der hieraus bekannte Antrieb dient auch dem Öffnen der Tür oder Klappe. Aus der US 2014/088826 A1 ist eine Schließvorrichtung mit einem Gesperre aus Drehfalle und Sperrklinke sowie einem elektrischen Antrieb für ein Öffnen des Gesperres und mit einer Betätigungseinrichtung für ein Betätigen des elektrischen Antriebs bekannt, wobei das Gesperre nur mit Hilfe des elektrischen Antriebs geöffnet werden kann. Ein kombiniertes Zuziehen und ein elektrisches Öffnen eines Heckklappenschlosses geht aus den Druckschriften DE 10 2004 011 798 B3 sowie DE 10 2004 013 671 A1 hervor.

Um ein Schloss öffnen zu können, gibt es eine Betätigungseinrichtung. Wird die Betätigungseinrichtung betätigt, so öffnet sich das Gesperre. Ein Griff einer Tür oder einer Klappe kann Teil der Betätigungseinrichtung sein. Dieser Griff wird in der Regel über ein Gestänge oder einen Bowdenzug mit einem Betätigungshebel des Schlosses verbunden. Wird der Griff betätigt, so wird mittels des Gestänges oder des Bowdenzugs der Betätigungshebel des Schlosses so verschwenkt, dass sich das Schloss öffnet.

Soweit nachfolgend nichts anderes angegeben, kann der Gegenstand der Erfindung die vorgenannten Merkmale einzeln oder in beliebiger Kombination aufweisen.

Bei einem Schloss der eingangs genannten Art ist es wichtig, dass sich ein solches Schloss nicht unplanmäßig öffnet. Würde sich während einer Fahrt ein Schloss unplanmäßig öffnen, dann könnte beispielsweise eine frontseitige Haubenklappe anschließend durch Aufklappen einem Fahrer die Sicht versperren. In Türen integrierte Airbags würden im Fall einer sich unplanmäßig öffnenden Türe ihre Schutzwirkungen verlieren.

Es ist Aufgabe der Erfindung, eine Schließvorrichtung bereitzustellen, welche komfortabel geöffnet und dennoch mit geringem Aufwand hergestellt werden kann und welche sich nicht unplanmäßig öffnen kann.

Zur Lösung der Aufgabe umfasst eine Schließvorrichtung die Merkmale des Anspruchs 1. Vorteilhafte Ausgestaltungen ergeben sich aus den abhängigen Ansprüchen.

Zur Lösung umfasst eine Schließvorrichtung ein Gesperre aus Drehfalle und Sperrklinke sowie zumindest einen elektrischen Antrieb für ein Öffnen des Gesperres. Die Schließvorrichtung weist eine Betätigungseinrichtung für ein Betätigen des elektrischen Antriebs auf, um so das Gesperre ausschließlich elektrisch öffnen zu können. Es gibt also keine Mechanik - zum Beispiel umfassend einen Griff und einen Bowdenzug, der den Griff mit einem Auslösehebel des Gesperres verbindet -, um das Gesperre nur auf mechanische Weise, also ohne Einsatz des elektrischen Antriebs oder einer anderen elektrischen Einrichtung, öffnen zu können. Erfindungsgemäß ist im nicht betätigten Zustand der elektrische Antrieb vollständig von stromführenden elektrischen Leitern getrennt. Insbesondere gibt es keine elektrische Verbindung zu einem Kontakt einer Batterie eines Kraftfahrzeugs und/ oder eines Generators. Es liegt dann keine Spannung an dem Antrieb an, der für ein Öffnen des Gesperres zwingend eingesetzt werden muss. Die Betätigungseinrichtung ist so beschaffen, dass durch Betätigen ein oder mehrere elektrische Kontakte geschlossen werden, um den elektrischen Antrieb mit einer Stromquelle zu verbinden, in Gang zu setzen, um so eine zugehörige Tür oder Klappe öffnen zu können.

Durch den elektrischen Antrieb wird erreicht, dass die Schließvorrichtung komfortabel geöffnet werden kann. Durch den Verzicht auf eine Mechanik, die ein rein mechanisches Öffnen ermöglicht, wird der Herstellungsaufwand und die Kosten gering gehalten. Darüber hinaus werden Risiken vermieden, die mit einer mechanischen Möglichkeit des Öffnens eines Gesperres verbunden sind. Insbesondere wird vermieden, dass sich aufgrund einer Beschleunigung von mechanischen Bauteilen ein Gesperre zum Beispiel in einem Crashfall unplanmäßig öffnen kann. Indem der elektrische Antrieb für ein Öffnen des Gesperres erst durch Betätigen mit einer Stromquelle bzw. einem stromführenden elektrischen Leiter verbunden wird, wird vermieden, dass der elektrische Antrieb zum Beispiel aufgrund von elektrischen Fehlfunktionen, so zum Beispiel durch Kurzschluss, unplanmäßig in Gang gesetzt werden kann.

In einer Ausgestaltung der Erfindung ist die Schließeinrichtung für ein Haubenschloss eingesetzt. Vorzugsweise im Innenraum des Kraftfahrzeugs befindet sich ein elektrischer Schalter oder eine elektronische Steuereinheit, mit der die Schließeinrichtung für ein Öffnen betätigt werden kann. Es handelt sich insbesondere um die einzige planmäßige Möglichkeit, die Schließeinrichtung für ein Öffnen zu betätigen. Im Fall einer Haube besteht kaum Bedarf, diese notfalls ergänzend mechanisch öffnen zu können. Daher eignet sich die Erfindung vor allem für Hauben.

In einer Ausgestaltung der Erfindung dient die Betätigungseinrichtung zugleich einem elektrischen Schließen der zugehörigen Tür oder Klappe. Insbesondere ist es nur möglich, mithilfe eines zweiten oder des genannten elektrischen Antriebs die Tür oder Klappe vollständig zu schließen. Die **Schließvorrichtung muss also zwingend für ein Schließen der zugehörigen Tür oder Klappe elektrisch betätigt werden.** Es kann so komfortabel geöffnet und auch komfortabel oder aus anderen Gründen mit Vorteil geschlossen werden. Der genannte Antrieb kann vorteilhaft eine Doppelfunktion übernehmen, was den Aufwand im Verhältnis zum Nutzen senkt. Ein zusätzlicher rein mechanischer Schließmechanismus ist vorzugsweise nicht vorhanden, der den Herstellungsaufwand sowie Öffnungsrisiken erhöhen würde.

In einer Ausgestaltung der Erfindung hat ein Betätigen für ein elektrisches Schließen der Schließvorrichtung schließlich zur Folge, dass im planmäßig geschlossenen Zustand der zugehörigen Tür oder Haube der elektrische Antrieb von ein oder mehreren stromführenden elektrischen Leitern getrennt wird, der zwingend für ein Öffnen eingesetzt wird. Es liegt dann keine elektrische Spannung mehr an diesem elektrischen Antrieb an. Die Betätigungseinrichtung übernimmt also vorteilhaft eine Mehrzahl von Funktionen.

In einer Ausgestaltung der Erfindung dient der Antrieb oder ein weiterer elektrischer Antrieb dem Schließen einer Haube oder Tür derart, dass ein Spalt - auch Haubenspalt genannt - zwischen angrenzender Karosserie und Haube bzw. Tür kleiner als 5 mm, vorzugsweise kleiner als 3 mm, ganz besonders bevorzugt kleiner als 1 mm ist und zwar im planmäßig geschlossenen Zustand einer zugehörigen Tür oder Klappe. Dies ist mithilfe eines elektrischen Antriebs im Unterschied zu einem mechanischen Schließen möglich, da durch einen elektrischen Antrieb gleichmäßige und hinreichend langsame Schließbewegungen sichergestellt werden können, um ein Aufschlagen der Haube bzw. Tür auf die angrenzende Karosserie zuverlässig zu vermeiden. Je kleiner das Spaltmaß eines Haubenspalts ist, umso geringer sind nachteilhafte Luftverwirbelungen, die durch einen Spalt während einer Fahrt hervorgerufen werden können.

In einer Ausgestaltung verringert der elektrische Antrieb oder ein zweiter elektrischer Antrieb den Haubenspalt in vorgenannter Weise, indem dieser das Gesperre ganz oder teilweise so bewegt, dass ein Haubenspalt verkleinert werden kann. Wird also eine Tür oder Klappe geschlossen, so verbleibt zunächst ein Spalt zwischen Tür und Türrahmen bzw. zwischen einem Rahmen und der zugehörigen Klappe. Durch den entsprechenden elektrischen Antrieb kann das Gesperre oder Teile des Gesperres so bewegt werden, dass sich dieser Spalt verringert. Insbesondere in dieser Ausgestaltung reduziert sich der Haubenspalt so schließlich auf Spaltmaße kleiner als 5 mm, vorzugsweise kleiner als 3 mm, besonders bevorzugt kleiner als 1 mm.

Die Schließvorrichtung umfasst in einer Ausführungsform eine Zuziehhilfe, um so durch teilweises Bewegen des Gesperres einen vorgenannten Spalt zu verkleinern. Ein solches Schloss mit Zuziehhilfe umfasst eine Drehfalle, die sowohl in einer Vorrastposition als auch in einer Hauptrastposition durch zumindest eine Sperrklinke verrastet werden kann. Der entsprechende elektrische Antrieb dreht die Drehfalle von der Vorrastposition in die Hauptrastposition.

In einer besonders vorteilhaften Ausgestaltung weist das Schloss mit Zuziehhilfe einen Sicherungsmechanismus auf, der verhindert, dass das Gesperre manuell in die Hauptrastposition bewegt werden kann. So kann ein Anschlag für den Schließbügel vorgesehen sein, der verhindert, dass der Schließbügel derart weit durch das Schließen einer Tür oder Klappe in das Einlaufmaul einer Drehfalle hineinbewegt werden kann, dass die Drehfalle in der Hauptrastposition verrastet werden kann. Wird das Gesperre durch eine Sperrklinke in der Vorrastposition verrastet, so wird diese Position zum Beispiel durch einen Mikroschalter durch Betätigen registriert. Registriert ein Mikroschalter die Vorrastposition, so wird also der Mikroschalter betätigt. Die Betätigung des Mikroschalters setzt dann den elektrischen Antrieb in Gang. Durch den Antrieb wird der Anschlag aus seiner Anschlagsposition bewegt. Im Anschluss daran wird die Drehfalle in Richtung Hauptrastposition durch einen elektrischen Antrieb gedreht, bis die Drehfalle in der Hauptrastposition verrastet wird.

Diese Ausgestaltung beruht also allgemein auf der Überlegung, zur Spaltminimierung ein Schloss bereitzustellen, welches durch wenigstens eine Sperrklinke in einer Vorrastposition und in einer Hauptrastposition verrastet werden kann. Es gibt eine Zuziehhilfe, um ausgehend von der Vorrastposition das Gesperre in seiner Hauptrastposition zu verrasten. Darüber hinaus gibt es einen Sicherungsmechanismus, durch den bewirkt wird, dass das Schloss nur mithilfe des elektrischen Antriebs in der Hauptrastposition verrastet werden kann.

Durch diese Ausführungsform wird sichergestellt, dass die Drehfalle nicht bis zur Hauptrastposition mit übermäßig hoher Geschwindigkeit gedreht werden kann. Es wird so das Erreichen eines übermäßig großen Überhubposition der Drehfalle vermieden, die eine Beschädigung der angrenzenden Karosserie zur Folge haben könnte. Im Vergleich zu üblichen Schlössern mit Vorrastposition und Hauptrastposition kann daher ein Spalt zwischen einer Klappe bzw. einer Tür und einer Karosserie minimiert werden, da dieser so ausgelegt werden kann, dass ein nur sehr kleiner Überhub möglich ist. Es ist so insbesondere möglich, das Spaltmaß auf 4 mm und weniger zu reduzieren. Es ist sogar möglich, ein Spaltmaß von 3 mm und weniger, vorzugsweise kleiner als 1 mm, zu erreichen.

In einer Ausgestaltung der Erfindung bewegt der entsprechende elektrische Antrieb im Anschluss an ein Verrasten in der Hauptrastposition das Gesperre ganz oder teilweise derart, dass ein Haubenspalt vorteilhaft verringert wird. Es können so geringe Spaltmaße erreicht werden, ohne dass eine angrenzende Karosserie beschädigt werden könnte.

Der Erfindung betrifft insbesondere eine Ausführungsform, bei der im Innenraum eines Kraftfahrzeuges ein mechanischer Schalter oder eine entsprechende Steuereinheit vorhanden ist, mit der ein Haubenschloss betätigt werden kann. Die elektrische Betätigungseinheit (Schalter, Steuereinheit oder dergleichen) wird dazu genutzt, um die elektrische Stromversorgung für das Haubenschloss zu schließen. D.h., im geschlossenen Zustand der Kraftfahrzeughaube liegt am entsprechenden Antrieb des Haubenschlosses keine Spannung an und erst im Fall einer Betätigung wird der Stromkreis geschlossen werden.

Das Schließen des Stromkreises kann dabei entweder unmittelbar durch das Schaltmittel selbst, d.h. einen mechanischen Schalter wie Druckknopf usw., erfolgen oder alternativ wird der Stromkreis mittels des Betätigungmittels, zum Beispiel ein Relais, eine elektrische Schaltung oder ein adäquates Schaltmittel geschlossen, so dass erst zu diesem Zeitpunkt der entsprechende Antrieb des Haubenschlosses mit Strom versorgt wird. Durch eine derartige Maßnahme kann dem Bedarf genüge getan werden, dass im Fall einer falschen, ungewollten Ansteuerung über ein defektes Steuergerät eine Haube unplanmäßig geöffnet wird.

Es zeigen
- Figur 1:: Schlossaufbau im verrasteten Zustand (Hauptrast);
- Figur 2:: perspektivische Ansicht des Schlosses;
- Figur 3:: Aufsicht auf das Schloss;
- Figur 4:: eingebautes Schloss nebst Haube;
- Figur 5:: vergrößerte Ansicht eines Ausschnitts im Fall des Auftreffens der Drehfalle auf den Anschlag des Schlosses;
- Figur 6:: anfängliches Schließen der Haube mit verbleibendem Spalt;
- Figur 7:: Fortsetzung des Schließvorgangs;
- Figur 8:: vollständiges Schließen der Haube ;
- Figur 9:: anfängliches Öffnen der Haube;
- Figur 10:: Fortsetzen des Öffnens der Haube;
- Figur 11:: Haube mit Verrasten der Drehfalle in der Vorrastposition;
- Figur 12:: vollständiges Öffnen der Haube;

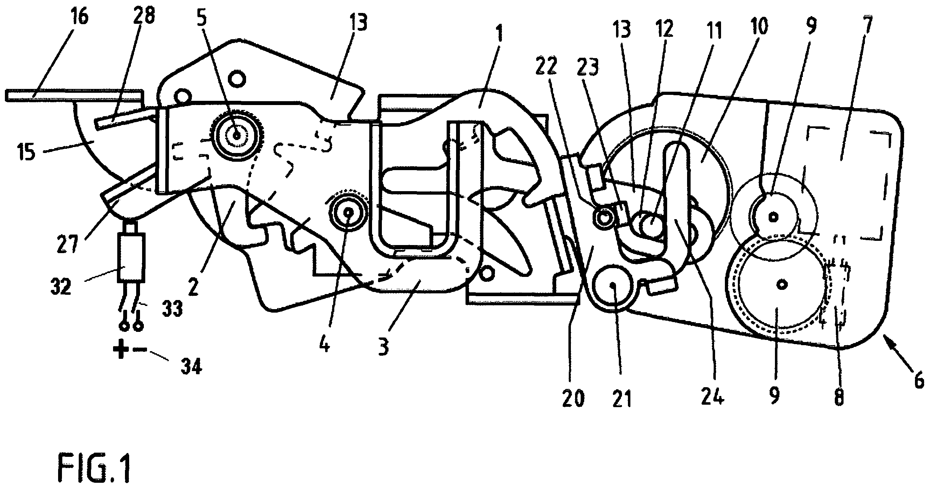

Die Figur 1 verdeutlicht den Aufbau einer Schließvorrichtung für eine Haube 19 eines Kraftfahrzeugs. Die Schließvorrichtung weist ein Gesperre aus Drehfalle 1 und Sperrklinke 2 auf. Die Drehfalle 1 kann in einer Schließstellung mit der Sperrklinke 2 wie in der Figur 1 gezeigt verrastet werden. Die Sperrklinke 2 ist an einer Platte 3 durch eine Achse 5 drehbar gelagert. Die Drehfalle 2 ist an der Platte 3 mittels ihrer Achse 5 drehbar gelagert. Die Platte 3 besteht aus Stabilitätsgründen vorzugsweise aus Metall. Sperrklinke 2 und/oder Drehfalle 1 bestehen vorzugsweise ebenfalls ganz oder zumindest teilweise aus Metall.

Mit einem Antrieb 6 kann das Gesperre aus Drehfalle 1 und Sperrklinke 2 so bewegt werden, dass ein Türspalt oder Klappenspalt verkleinert werden kann. Der Antrieb 6 kann zugleich dem Öffnen der zugehörigen Tür oder Klappe dienen. Der Antrieb 6 verfügt zu diesem Zweck über einen Elektromotor 7 und eine mit der Welle des Motors verbundene Schnecke 8. Der Motor 7 kann eine Drehbewegung der Schnecke 8 bewirken. Eine Drehbewegung der Schnecke 8 bewirkt über ein vorzugsweise vorgesehenes mehrstufiges Getriebe 9 eine Drehbewegung einer Scheibe 10. Von der Scheibe 10 steht ein Bolzen 11 senkrecht ab. Der Bolzen 11 ist an der Scheibe 10 befestigt. Der Bolzen 11 weist einen Abstand zur Drehmitte der Scheibe 10 auf und ist also exzentrisch angeordnet. Der Bolzen 11 reicht in ein Langloch 12 eines schwenkbar gelagerten Hebels bzw. Schwinghebel 13 hinein. Der Schwinghebel 13 ist durch die Achse bzw. Welle 5 schwenkbar gelagert. Ein Drehen der Scheibe 10 bewirkt damit ein Verschwenken des Schwinghebels 13.

Der Hebel 10 sowie die Platte 3 sind starr mit der Welle 5 verbunden. Ein Verschwenken des Hebels 13 bewirkt damit synchron ein Verschwenken der Platte 3.

Von der Welle 5 aus gesehen erstrecken sich Platte 3 und Schwinghebel 13 in die gleiche Richtung und zwar vorzugsweise in Richtung des Antriebs 6, um so den Bauraum gering zu halten. Der Schwinghebel 13 erstreckt sich über die Platte 3 hinaus und zwar insbesondere über das Einlaufmaul der Platte 3 hinaus, also über den Bereich hinaus, in den ein Schließbolzen 18 gelangt, wenn die Haube 19 geschlossen wird. Hierdurch werden günstige Hebelverhältnisse bereitgestellt, um den Schwinghebel 13 mit geringer elektrischer Leistung für ein Verkleinern eines Haubenspalts verschwenken zu können.

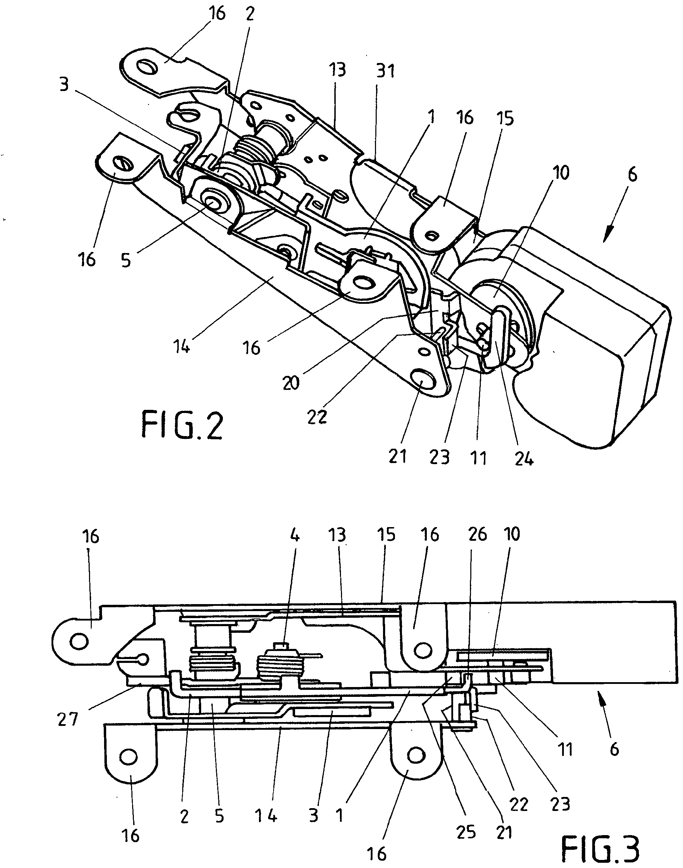

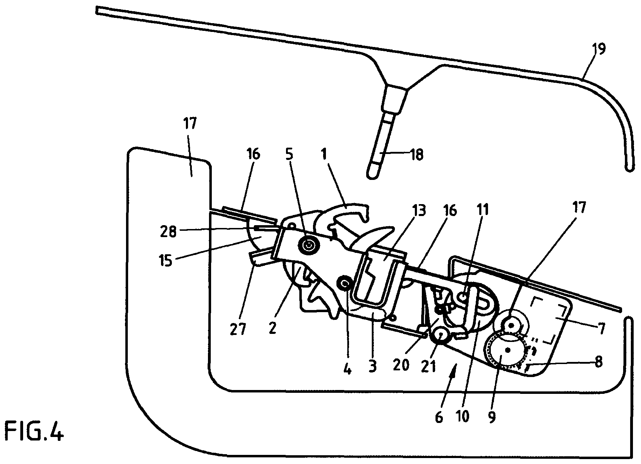

Darüber hinaus umfasst die Schließvorrichtung eine in den Figuren 2 und 3 dargestellte erste Platte 14. Auf der gegenüberliegenden Seite gibt es vorzugsweise aus Stabilitätsgründen eine zweite Platte 15. Die beiden Platten 14 und 15 lagern die Achse bzw. Welle 5 drehbar. Aus Stabilitätsgründen bestehen die ein oder zwei Platten 14 und 15 vorzugsweise aus Metall. Die ein oder zwei Platten 14 und 15 werden mithilfe von abgebogenen, mit Löchern versehenen Laschen 16 am Fahrzeug mit Nuten oder Schrauben befestigt, so zum Beispiel an einer Tür, Klappe oder an einer Karosserie. Sind die ein oder zwei Platten 14 und 15 wie in der Figur 4 gezeigt an der Fahrzeugkarosserie 17 befestigt, so ist der zugehörige Schließbolzen 18 (siehe Figur 4) an der Tür oder Klappe 19 befestigt. Die Figur 4 zeigt den Fall einer Befestigung an einer Fronthaube eines Kraftfahrzeugs. Der Antrieb 6 ist an der Platte 15 angebracht. Eine der Platten 14 oder 15 dient also vorzugsweise auch der Befestigung des Antriebs 6, um so die Zahl der Teile gering zu halten.

Die Schließvorrichtung umfasst einen stegförmigen Anschlag 20, der durch eine Achse oder Welle 21 drehbar vorzugsweise an der Platte 14 befestigt ist. Insbesondere von der Platte 14 steht ein Bolzen 22 senkrecht ab, der eine Schwenkbewegung des Anschlags 20 zu begrenzen vermag (siehe Figuren 2 und 3). Der stegförmige Anschlag 20 verfügt über eine vorzugsweise abgebogenen Lasche 23, die durch Verschwenken gegen den Bolzen 22 bewegt werden kann, um durch Erreichen des Bolzens 22 eine Fortsetzung einer entsprechenden Schwenkbewegung zu verhindern, wie die Figuren 1, 2 und 3 verdeutlichen.

Von der Achse oder Welle 21 ausgehend erstreckt sich ein Bügel 24, der der Steuerung der Bewegung des Anschlags 20 dient. Zusammen mit dem Anschlag 20 bildet der Bügel 24 näherungsweise eine U-Form. Der Bügel 24 liegt grundsätzlich an dem Bolzen 11 an. Wird die Scheibe 10 gedreht, so wird damit auch der Bügel 24 aufgrund des Bolzens 11 bewegt. Das Bewegen des Bügels 24 bewirkt eine entsprechend synchrone Bewegung des Anschlags 20.

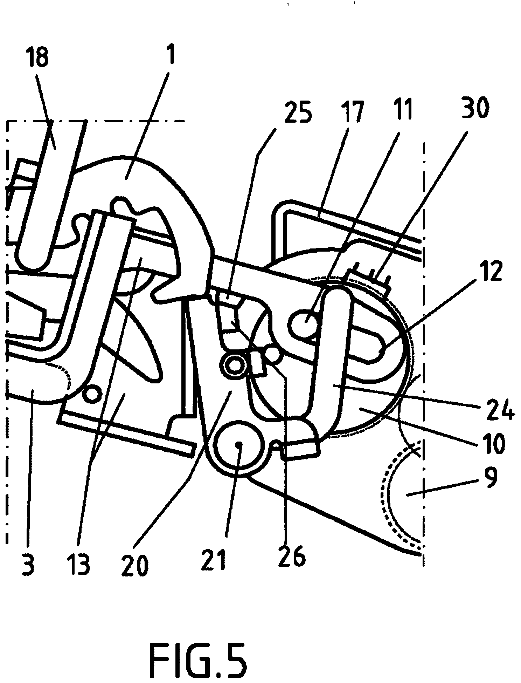

Der Anschlag 20 dient nicht nur als Anschlag für die Drehfalle 1, sondern auch als Anschlag für den Schwinghebel 13, wenn der Schließbolzen 18 in das Schloss einfällt. Damit dann der Anschlag 20 auch für den Schwinghebel 13 einen Anschlag darstellt, verfügen sowohl der Anschlag 20 als auch der Schwinghebel 13 über geeignet abgebogenen Laschen 25 und 26. Fällt der Schließbolzen 18 in das Schloss ein, so trifft die abgebogenen Lasche 25 des Schwinghebels 13 auf die abgebogenen Lasche 26 des Anschlags 20 auf, wie der vergrößerte Ausschnitt der Figur 5 verdeutlicht. Die Figur 5 verdeutlicht ferner das Auftreffen eines Armendes der Drehfalle 1 auf das Ende des Anschlags 20. Bei dieser Ausführungsform stehen daher zwei Wege zur Verfügung, um eine Last während des Schließens in die Platte 14 einzuleiten und so den Antrieb 6 zu schonen.

Das Schloss verfügt ferner über einen Auslösehebel 27, der ebenfalls durch die Achse bzw. Welle 5 drehbar gelagert wird. Der Auslösehebel 27 wird über einen zweiten elektrischen Antrieb 32 und/ oder durch den Antrieb 6 mittels einer nicht dargestellten Mechanik ausgelöst. Durch Betätigung bzw. Schließen eines Schalters 33 wird der Antrieb 32 mit einer Stromquelle 34 verbunden, der Antrieb 32 in Gang gesetzt und so die Sperrklinke 2 aus ihrer Rastposition heraus bewegt, um anschließend eine Tür oder Klappe öffnen zu können. Der Antrieb 32 kann ein Stellglied sein, der einen Riegel aus dem Antrieb linear heraus zu bewegen vermag. Der Schalter 32 kann im Innenraum eines Kraftfahrzeugs angeordnet sein.

Beispielsweise die Figur 3 zeigt, dass die Achsen/ Wellen mit Federn versehen sein können, um die schwenkbaren Komponenten mittels Federkraft bewegen zu können, so zum Beispiel die Drehfalle 1 von einer Schließstellung in Richtung Öffnungsstellung.

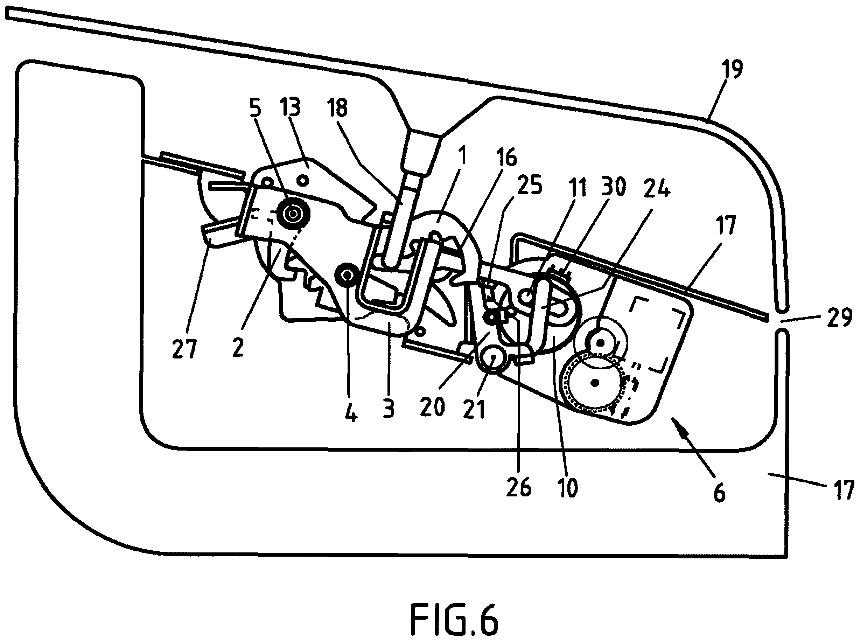

Die Figur 6 verdeutlicht die Situation im Anschluss an ein Einfallen des Schließbolzens 18 in das Schloss. Ein Arm der Drehfalle 1 und zwar der sogenannte Lastarm liegt auf dem Anschlag 20 auf. Die Lasche 25 des Schwinghebels 13 liegt auf der Lasche 26 des Anschlags 20 auf. Die Drehfalle 1 ist durch die Sperrklinke 2 verrastet worden und befindet sich in der Hauptrast. Es verbleibt ein Spalt 29 zwischen der Haube 19 und der Karosserie 17 des Kraftfahrzeugs. Die Scheibe 10 des Antriebs 6 befindet sich in einer Ausgangsstellung. In der Ausgangsstellung befindet sich der Bolzen 11 in einer Ausführungsform oberhalb der Drehmitte der Scheibe 10.

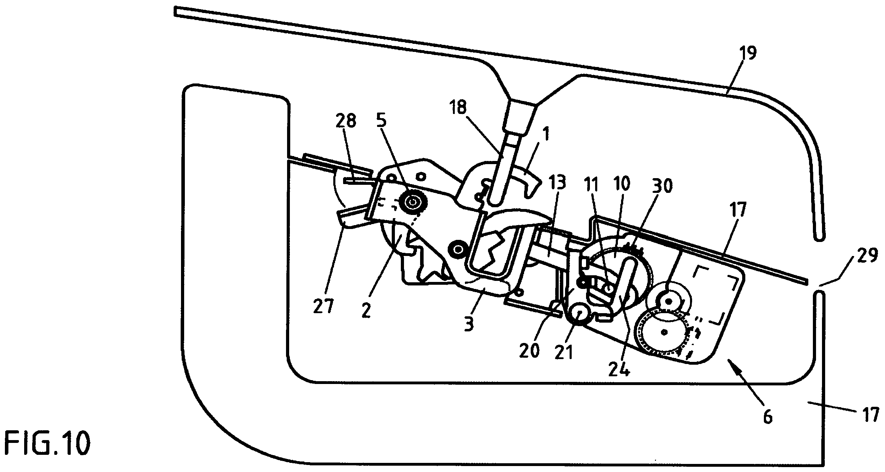

Es ist aber in einer Ausführungsform auch möglich, dass die Drehfalle 1 durch ein Einfallen des Schließbolzens 18 zunächst lediglich in der in der Figur 10 gezeigten Vorrastposition verrastet wird. Erst im Anschluss an das Wegbewegen des Anschlags 20 aus seiner Anschlagsposition kann dann die Drehfalle durch einen elektrischen Antrieb und zwar insbesondere durch den Elektromotor 7 nebst einer nicht dargestellten Mechanik und/ oder den Antrieb 32 in die Hauptrastposition verschwenkt werden. Es kann bei dieser Ausführungsform der Spalt 29 durch Erreichen der Hauptrastposition auf 2 mm bis 4 mm reduziert werden.

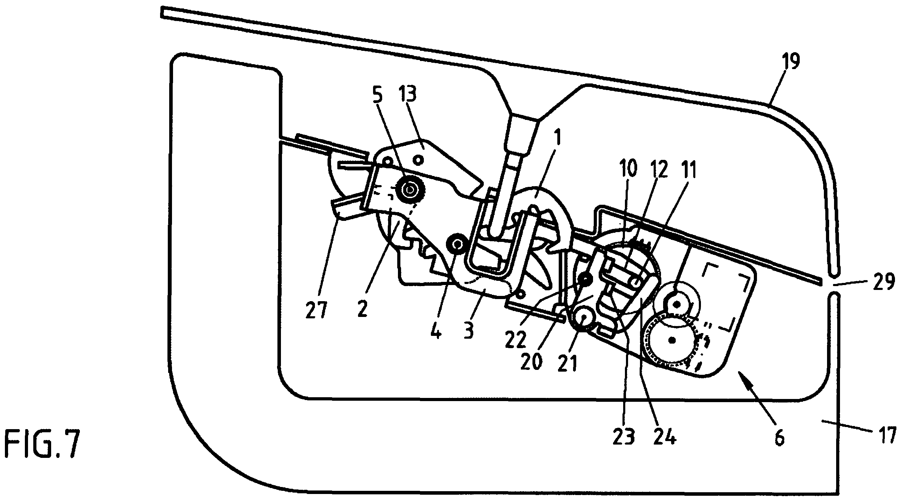

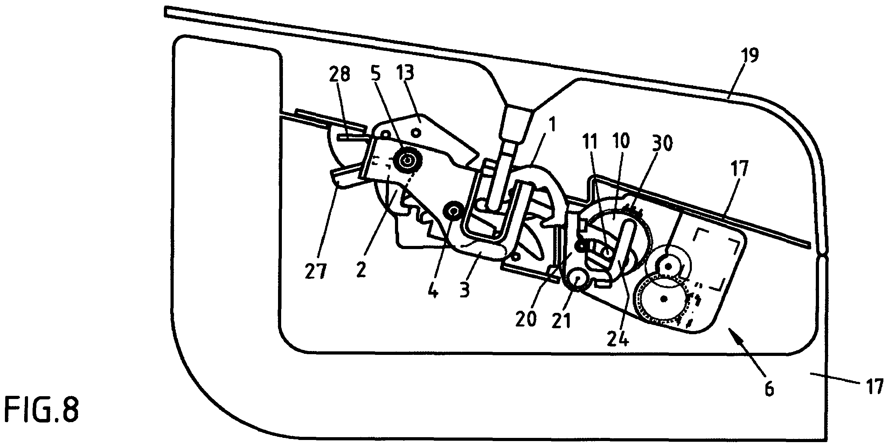

Um den Spalt 29 nun ausgehend von der Hauptrastposition des Gesperres weiter zu verkleinern, wird die Scheibe 10 mithilfe des Antriebs 6 im Uhrzeigersinn gedreht. Hierdurch wandert der Bolzen 11 innerhalb des Langlochs 12 durch eine Viertelkreisdrehung zunächst von der einen linken Langlochseite zu anderen rechten Langlochseite, wie der Vergleich der Figuren 6 und 7 verdeutlicht. Durch die Drehung im Uhrzeigersinn wird der Anschlag 20 mithilfe des Bügels 24 durch Verschwenken im Uhrzeigersinn zunächst aus seiner Anschlagsposition heraus bewegt. Ist der Anschlag 20 aus seiner Anschlagsposition heraus bewegt worden, so kann nun der Schwinghebel 13 und damit auch die Platte 3 im Uhrzeigersinn um ihre Achse bzw. Welle 5 verschwenkt werden, um so den Spalt 29 weiter zu verkleinern, um schließlich wie in Figur 8 gezeigt ein spaltfreien Kontakt zwischen Motorhaube 19 und Karosserie 17 an der Frontseite herzustellen. Wird die Scheibe 10 weiter im Uhrzeigersinn gedreht und vollzieht die Scheibe 10 so eine ca. 180° Drehung, so verschwindet also schließlich der Spalt, wie die Figur 8 verdeutlicht.

Beispielsweise mithilfe eines Mikroschalters 30 wird die Position der Scheibe 10 abgefragt. Hat die Scheibe 10 die in der Figur 8 gezeigte Stellung erreicht, so wird dies durch den Mikroschalter 30 ermittelt und der Antrieb gestoppt. Ergänzend wird der nur in der Figur 1 dargestellte Antrieb 32 von der Stromquelle 34 getrennt. Alternativ oder ergänzend kann durch eine Stromerkennung (Strom für den Elektromotor) die jeweils erreichte Position ermittelt und geeignet geschaltet werden. Ein oder mehrere weitere Mikroschalter können vorgesehen sein, um zum Beispiel die Position von Drehfalle 1 und/ oder Sperrklinke 2 zu ermitteln und in Abhängigkeit davon das Verrasten und / oder Öffnen des Gesperres zu steuern. Es kann aber auch in einer Ausgestaltung notwendig sein, den der Schalter 33 zu betätigen, um so planmäßig schließen zu können. Zugleich kann diese Betätigung des Schalters 33 für ein Schließen bewirken, dass der Antrieb 32 von der Stromquelle 34 getrennt wird.

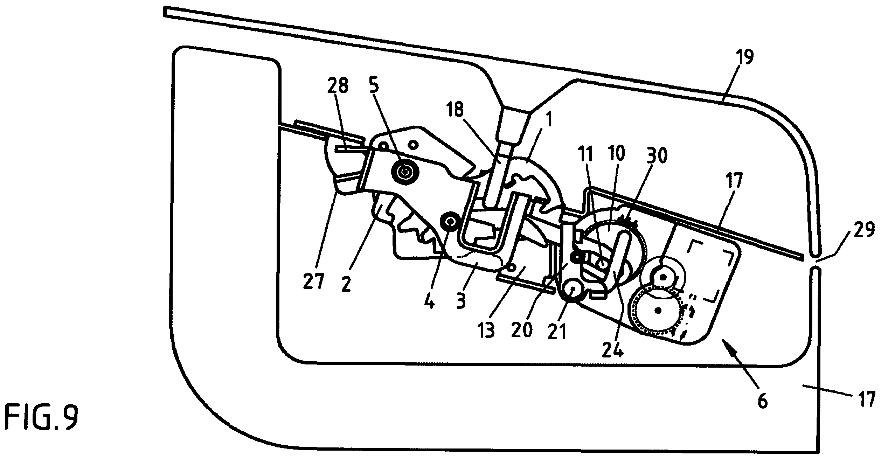

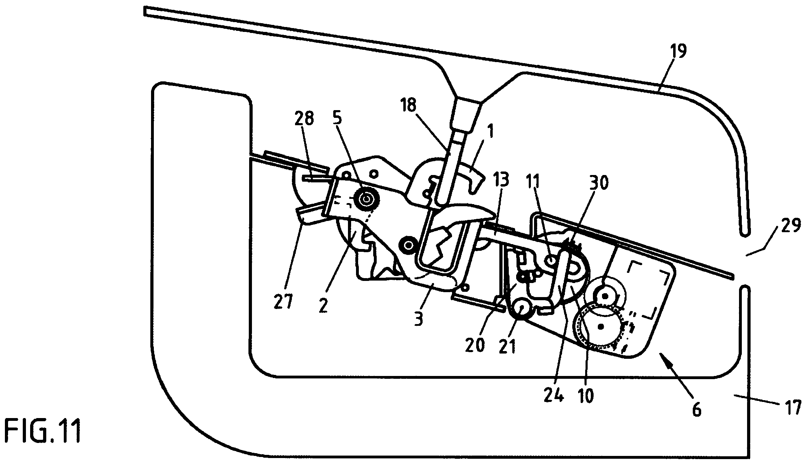

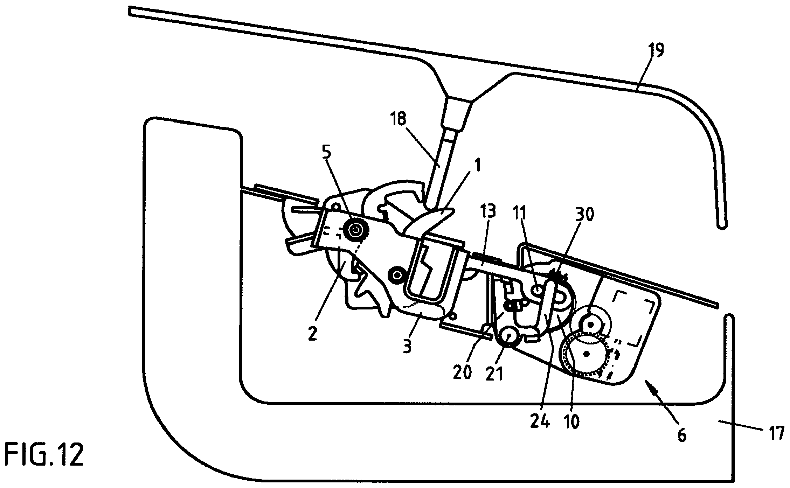

Die Figuren 9 bis 12 verdeutlichen das Öffnen und insbesondere den Verfahrensablauf beim Öffnen der Haube 19. Zunächst wird die Sperrklinke 2 mittels des Antriebs 32 elektrisch aus ihrer Rastposition heraus bewegt, wie die Figur 9 zeigt. Dies geschieht durch Betätigen des Auslösehebels 27, der hierfür im Uhrzeigersinn um seine Achse bzw. Welle 5 mittels des Antriebs 32 herum verschwenkt wird. Die Drehfalle 1 kann dann entgegengesetzt zum Uhrzeigersinn verschwenken, wodurch die Haube 19 anfänglich geöffnet wird. Es entsteht ein Spalt 29. Die Drehfalle 1 verrastet nun in einer Vorrastposition, wie die Figur 10 verdeutlicht. Das Verrasten in der Vorrastposition geschieht wiederum mithilfe der Sperrklinke 2. Beispielsweise durch einen Mikroschalter oder einen Sensor kann die in der Figur 10 erreichte Position abgefragt werden. Hierdurch kann der Antrieb 6 so gestartet werden, dass sich die Scheibe 10 nun entgegengesetzt im Uhrzeigersinn um ca. 180° dreht. Es wird so die in der Figur 11 gezeigte Position erreicht. Im Anschluss daran wird die Sperrklinke 2 aus ihrer Vorrastposition herausgeschwenkt. Dies kann durch einen elektrischen Antrieb geschehen, der durch Sensoren gesteuert wird, um das Schloss so elektrisch zu öffnen. Die Drehfalle 1 kann dann weiter in Richtung Öffnungsstellung verschwenken und schließlich die Haube 19 freigegeben, wie die Figur 12 verdeutlicht.

Der Schwinghebel 13 kann eine abgebogene Lasche 31 aufweisen, wie die Figur 2 zeigt. Die Lasche 31 kann auf einer Oberkante der Platte 15 aufsetzen, wenn die Scheibe 10 ausgehend von ihrer Ausgangsposition um ca. 180° gedreht worden ist. Hierdurch kann ebenfalls eine geeignete Wegbegrenzung für das Verschwenken des Schwinghebels 13 sichergestellt werden.

Der Schwinghebel 13 kann einen stufenförmigen Verlauf wie in Figur 2 gezeigt aufweisen, um so zur Scheibe 10 zu gelangen und den Bauraum gering zu halten.

### Bezugszeichenliste:

1: Drehfalle
2: Sperrklinke
3: Platte
4: Achse für die Drehfalle
5: Achse unter anderem für die Sperrklinke
6: Antrieb
7: Elektromotor
8: Schnecke
9: Getriebe
10: Scheibe
11: Bolzen der Scheibe
12: Langloch eines Schwinghebels
13: Schwinghebel
14: Platte für einen Anschlag
15: Platte
16: Lasche
17: Karosserie
18: Schließbolzen
19: Haube
20: Anschlag
21: Achse oder Welle des Anschlags
22: Bolzen einer Platte
23: Lasche
24: Bügel des Anschlags
25: abgebogene Lasche des Schwinghebels
26: abgebogene Lasche des Anschlags
27: Auslösehebel
29: Spalt zwischen Haube und Karosserie
30: Mikroschalter
31: abgebogene Lasche des Schwinghebels
32: elektrischer Antrieb
33: elektrischer Schalter
34: Stromquelle

## Patentansprüche

1. Schließvorrichtung mit einem Gesperre aus Drehfalle(1) und Sperrklinke (2) sowie einem elektrischen Antrieb (6, 32) für ein Öffnen des Gesperres und mit einer Betätigungseinrichtung (33) für ein Betätigen des elektrischen Antriebs (6, 32), um so das Gesperre elektrisch öffnen zu können, wobei das Gesperre nur mit Hilfe des elektrischen Antriebs (6, 32) geöffnet werden kann, **dadurch gekennzeichnet, dass** der elektrische Antrieb (6, 32) im nicht betätigten Zustand vollständig von stromführenden elektrischen Leitern getrennt ist.

2. Schließvorrichtung nach Anspruch 1, **dadurch gekennzeichnet, dass** ein elektrischer Schalter (33), vorzugsweise nur ein elektrischer Schalter, oder eine elektronische Steuereinrichtung, vorzugsweise nur eine elektronische Steuereinrichtung, als Betätigungseinrichtung im Innenraum eines Kraftfahrzeugs vorhanden ist.

3. Schließvorrichtung nach einem der vorhergehenden Ansprüche, **dadurch gekennzeichnet, dass** die Schließvorrichtung für eine Haube (19) eingesetzt ist.

4. Schließvorrichtung nach einem der vorhergehenden Ansprüche, **dadurch gekennzeichnet, dass** die elektrische Betätigungseinrichtung (33) für ein Schließen betätigt werden muss.

5. Schließvorrichtung nach einem der vorhergehenden Ansprüche, **dadurch gekennzeichnet, dass** ein Betätigen der Betätigungseinrichtung (33) für ein Schließen bewirkt, dass der elektrische Antrieb im geschlossenen Zustand von stromführenden elektrischen Leitern getrennt ist.

6. Schließvorrichtung nach einem der vorhergehenden Ansprüche, **dadurch gekennzeichnet, dass** ein Betätigen der Betätigungseinrichtung (33) für ein Schließen bewirkt, dass der elektrische Antrieb (6, 32) eine Haube oder Tür derart schließt, dass ein Haubenspalt (29) zwischen angrenzender Karosserie und Haube bzw. Tür kleiner als 5 mm, vorzugsweise kleiner als 3 mm, ganz besonders bevorzugt kleiner als 1 mm ist und zwar im planmäßig geschlossenen Zustand der zugehörigen Tür oder Klappe.

7. Schließvorrichtung nach einem der vorhergehenden Ansprüche, **dadurch gekennzeichnet, dass** der Antrieb (6, 32) das Gesperre ganz oder teilweise so bewegen kann, dass ein Haubenspalt (29) verkleinert werden kann.

8. Schließvorrichtung nach einem der vorhergehenden Ansprüche, **dadurch gekennzeichnet, dass** das Gesperre (1, 2) nur durch eine Zuziehhilfe von einer Vorrastposition in eine Hauptrastposition des Gesperres gebracht werden kann.

9. Schließvorrichtung nach dem vorhergehenden Anspruch, **gekennzeichnet durch** einen Anschlag für die Drehfalle (1) und/oder für einen Schließbolzen (18) der Schließvorrichtung, der verhindert, dass das Gesperre (1, 2) durch manuelles Schließen einer Tür oder Klappe in der Hauptrastposition verrastet werden kann.

10. Schließvorrichtung nach dem vorhergehenden Anspruch, **dadurch gekennzeichnet, dass** diese so beschaffen ist, dass der Anschlag aus seiner Anschlagsposition durch den Antrieb herausbewegt wird, wenn das Gesperre durch Schließen einer Tür oder Klappe in der Vorrastposition verrastet worden ist, und im Anschluss daran das Gesperre in der Hauptrastposition durch den Antrieb verrastet wird.

11. Schließvorrichtung nach einem der vorhergehenden Ansprüche, **dadurch gekennzeichnet, dass** der Türspalt oder Haubenspalt (29, S) in der Hauptrastposition nicht mehr als 5 mm, vorzugsweise nicht mehr als 3 mm, besonders bevorzugt nicht mehr als 1 mm beträgt.

12. Verfahren zum Schließen eines Gesperres, vorzugsweise eines Haubenschlosses eines Kraftfahrzeuges, bei dem eine Schließvorrichtung gemäß einem der Ansprüche 1 bis 11 verwendet wird.

## Claims

1. Closing device with a locking mechanism consisting of a catch (1) and a pawl (2) and an electrical drive (6, 32) for an opening of the locking mechanism and with an operating device (33) for operation of the electrical drive (6, 32), in order to thus be able to electrically open the locking mechanism, wherein the locking mechanism can only be opened with aid of the electrical drive (6, 32) **characterized in that** the electrical drive (6, 32) is completely disconnected from current-carrying electrical conductors in the non-operated state.

2. Closing device according to claim 1, **characterized in that** an electrical switch (33), preferably only one electrical switch, or an electronic control device, preferably only one electronic control device, is present as an operating device inside a motor vehicle.

3. Closing device according to one of the previous claims, **characterized in that** the closing device is used for a hood (19).

4. Closing device according to one of the previous claims, **characterized in that** the electrical operating device (33) must be operated for closing.

5. Closing device according to one of the previous claims, **characterized in that** an operation of the operating device (33) for closing causes the electrical drive to be disconnected from the current-carrying electrical conductors in the closed state.

6. Closing device according to one of the previous claims, **characterized in that** an operation of the operating device (33) for closing causes the electrical drive (6, 32) to close a hood or a door in such a way that a hood gap (29) between the adjacent chassis and the hood or door is less than 5 mm, is preferably less than 3 mm, and is especially preferably less than 1 mm and in the scheduled closed state of the pertaining door or flap.

7. Closing device according to one of the previous claims, **characterized in that** the drive (6, 32) can move the locking mechanism completely or partially in such a way that a hood gap (29) can be reduced.

8. Closing device according to one of the previous claims, **characterized in that** the locking mechanism (1, 2) can only be shifted by means of a closing aid from a pre-latching position into a main latching position of the locking mechanism.

9. Closing device according to the previous claim, **characterized by** a stop for the catch (1) and/or for a locking bolt (18) of the closing device which prevents the locking mechanism (1, 2) being able to be latched in the main latching position by manual closing of a door or a flap.

10. Closing device according to the previous claim, **characterized in that** this is created in such a way that the stop is moved out of its stop position by the drive when the locking mechanism has been latched in the pre-latching position by closing of a door or a flap and subsequently the locking mechanism is latched in the main latching position by the drive.

11. Closing device according to one of the previous claims, **characterized in that** the door gap or hood gap (29, S) in the main latching position is not more than 5 mm, preferably not more than 3 mm, of particular preference not more than 1 mm.

12. Method for closing of a locking mechanism, preferably a hood lock of a motor vehicle, in which a closing device according to one of the claims 1 to 11 is used.

## Revendications

1. Dispositif de fermeture, doté d'un dispositif d'encliquetage se composant d'un loquet tournant (1) et d'un cliquet d'arrêt (2), ainsi que d'un entraînement électrique (6, 32) destiné à ouvrir le dispositif d'encliquetage, et d'un dispositif d'actionnement (33) destiné à actionné l'entraînement électrique (6, 32) afin d'ouvrir électriquement le dispositif d'encliquetage, à savoir que le dispositif d'encliquetage être ouvert seulement avec l'aide de l'entraînement électrique (6, 32), **caractérisé en ce que** l'entraînement électrique (6, 32), lorsqu'il n'est pas actionné, est entièrement séparément des conducteurs électriques.

2. Dispositif de fermeture selon la revendication 1, **caractérisé en ce qu'**un commutateur électrique (33), de préférence un seul commutateur électrique, ou une unité de commande électronique, de préférence une seule unité de commande électronique, est installée à l'intérieur d'un véhicule, à titre d'unité d'actionnement.

3. Dispositif de fermeture selon une des revendications précédentes, **caractérisé en ce que** le dispositif de fermeture est inséré pour un capot (19).

4. Dispositif de fermeture selon une des revendications précédentes, **caractérisé en ce que** le dispositif électrique d'actionnement (33) doit être actionné pour procédé à la fermeture.

5. Dispositif de fermeture selon une des revendications précédentes, **caractérisé en ce que** l'actionnement de l'unité d'actionnement (33) de la fermeture a pour effet de séparer l'entraînement électrique, lorsqu'il est fermé, des conducteurs électriques.

6. Dispositif de fermeture selon une des revendications précédentes, **caractérisé en ce qu'**un actionnement de l'unité d'actionnement (33) de la fermeture a pour effet que l'entraînement électrique (6, 32) ferme un capot ou une porte de telle sorte que la fente du capot (29) entre la carrosserie adjacente et le capot / la porte fait moins de 3 mm, voire, idéalement, moins de 1 mm lorsque la porte / le capot est fermé(e) correctement.

7. Dispositif de fermeture selon une des revendications précédentes, **caractérisé en ce que** l'entraînement (6, 32) est capable de faire bouger le dispositif d'encliquetage, entièrement ou en partie, de manière à ce qu'il soit possible de réduire la fente du capot (29).

8. Dispositif de fermeture selon une des revendications précédentes, **caractérisé en ce que** le dispositif d'encliquetage (1, 2) ne peut être mis en position principale d'encliquetage depuis une position de pré-encliquetage qu'à l'aide d'un dispositif de fermeture.

9. Dispositif de fermeture selon la revendication précédente, **caractérisé par** une butée pour le loquet tournant (1) et/ou pour un boulon de fermeture (18) du dispositif de fermeture qui empêche que le dispositif d'encliquetage (1, 2) ne puisse être encliqueté en position principale d'encliquetage si l'on ferme manuellement une porte ou un clapet.

10. Dispositif de fermeture selon la revendication précédente, **caractérisé en ce que** celui-ci est conçu de manière à ce que la butée est extraite de sa position d'arrêt au moyen de l'entraînement si le dispositif d'encliquetage a été encliqueté en position de pré-encliquetage en fermant une porte ou un clapet, et qu'il est ensuite encliqueté en position principale d'encliquetage par l'entraînement.

11. Dispositif de fermeture selon une des revendications précédentes, **caractérisé en ce que** l'ouverture du capot (29, S) ne dépasse pas 5 mm et, de préférence, 3 mm en position d'encliquetage principale, voire, idéalement, 1 mm.

12. Procédé de fermeture d'un dispositif d'encliquetage, de préférence d'une serrure de capot de voiture pour lequel est utilisé un dispositif de fermeture comme prévu par une des dispositions 1 à 11.
